# EUROPÄISCHE PATENTSCHRIFT

(11) **EP 3 072 121 B1**
(45) Veröffentlichungstag und Bekanntmachung des Hinweises auf die Patenterteilung: **10.01.2018**
(21) Anmeldenummer: 14802039.9
(22) Anmeldetag: 20.11.2014
(51) Int. Cl.: G08C 17/02, H04L 12/28, H04Q 9/00

(54) **VERFAHREN ZUR FERNÜBERWACHUNG DES BETRIEBS EINES HAUSHALTSGERÄTS, TRAGBARES KOMMUNIKATIONSENDGERÄT UND COMPUTERPROGRAMMPRODUKT**
METHOD FOR REMOTE MONITORING OF THE OPERATION OF A HOUSEHOLD APPLIANCE, PORTABLE COMMUNICATION END DEVICE, AND COMPUTER PROGRAM PRODUCT
PROCÉDÉ DE SURVEILLANCE À DISTANCE DU FONCTIONNEMENT D'UN APPAREIL ÉLECTROMÉNAGER, TERMINAL DE COMMUNICATION PORTABLE ET PRODUIT LOGICIEL INFORMATIQUE

(30) Priorität: 22.11.2013 DE 102013223932
(43) Veröffentlichungstag der Anmeldung: 28.09.2016
(73) Patentinhaber: BSH Hausgeräte GmbH, 81739 München (DE)
(72) Erfinder: WINDE, Mirco, 81667 München (DE)
(86) Internationale Anmeldenummer: PCT/EP2014/075173
(87) Internationale Veröffentlichungsnummer: WO 2015/075130

(56) Entgegenhaltungen:
- EP-A2- 1 338 961
- DE-A1-102009 033 361
- MARUSIC L ET AL: "Home-in-Palm - A mobile service for remote control of household energy consumption", TELECOMMUNICATIONS (CONTEL), PROCEEDINGS OF THE 2011 11TH INTERNATIONAL CONFERENCE ON, IEEE, 15. Juni 2011 (2011-06-15), Seiten 109-116, XP031910394, ISBN: 978-1-61284-169-4

## Beschreibung

Die Erfindung betrifft ein Verfahren zur Fernüberwachung des Betriebs eines Haushaltsgeräts mithilfe eines, insbesondere tragbaren, Kommunikationsendgeräts, wobei Zustandsdaten des Haushaltsgeräts durch eine Kommunikationseinrichtung des Kommunikationsendgeräts empfangen werden und durch eine Steuereinheit des Kommunikationsendgeräts ein aktueller Betriebszustand des Haushaltsgeräts anhand der empfangenen Zustandsdaten erfasst wird. Die Steuereinheit steuert eine Anzeigeeinrichtung des Kommunikationsendgeräts zum Anzeigen einer graphischen Benutzeroberfläche an, welche zur Fernüberwachung des Betriebs dient, wobei über die Benutzeroberfläche der aktuelle Betriebszustand des Haushaltsgeräts ausgegeben wird. Die Erfindung betrifft außerdem ein tragbares Kommunikationsendgerät, welches zum Durchführen eines solchen Verfahrens ausgelegt ist, sowie ein Computerprogrammprodukt mit einem Speichermedium, auf welchem ein Computerprogramm zum Durchführen eines derartigen Verfahrens abgelegt ist.

Es ist bereits Stand der Technik, Haushaltsgeräte mit einer Kommunikationseinrichtung auszustatten, über welche eine drahtlose Kommunikation mit einem mobilen Kommunikationsendgerät durchgeführt werden kann. Die Datenkommunikation zwischen den Haushaltsgeräten einerseits und einem mobilen Endgerät andererseits kann dabei direkt unter Verwendung eines drahtlosen Heimnetzwerks durchgeführt werden, wie beispielsweise eines WLAN-Netzwerks. Andererseits kann die Datenkommunikation auch unter Vermittlung eines Internet-Servers vorgenommen werden, wobei hier die Haushaltsgeräte beispielsweise über einen WLAN-Router mit dem Internet-Server kommunizieren können. Üblicherweise wird die Datenkommunikation über das Heimnetzwerk durchgeführt, solange sich das tragbare Endgerät in der Reichweite dieses Netzwerks befindet. Befindet sich das tragbare Endgerät außerhalb der Reichweite, erfolgt die Datenkommunikation dann über den Internet-Server. Wird als tragbares Endgerät beispielsweise ein Mobiltelefon verwendet, wird die Kommunikationsverbindung zum Internet-Server über ein Mobilfunknetzwerk aufgebaut.

Vorliegend gilt das Interesse der Fernüberwachung des Betriebs von Haushaltsgeräten mithilfe eines tragbaren Kommunikationsendgeräts, wie beispielsweise eines Mobiltelefons (Smartphone) oder aber eines Tablet-PCs oder dergleichen. Auf dem tragbaren Kommunikationsendgerät kann dabei eine Applikation bzw. Anwendung (Computerprogramm) installiert werden, mittels welcher auf einem Display des Endgeräts eine graphische Benutzeroberfläche erzeugt wird, welche üblicherweise nicht nur zur Fernüberwachung, sondern auch zur Fernsteuerung der Haushaltsgeräte ausgelegt ist. Eine solche graphische Benutzeroberfläche wird üblicherweise auf einem Touch-Screen des mobilen Endgeräts bereitgestellt, sodass der Benutzer die Haushaltsgeräte über diese Benutzeroberfläche bedienen kann. Dazu werden zwischen den Haushaltsgeräten einerseits und dem mobilen Endgerät andererseits Signale übertragen: Von den Haushaltsgeräten können an das mobile Endgerät Zustandsdaten übermittelt werden, welche Informationen über den aktuellen Betriebszustand des jeweiligen Haushaltsgeräts beinhalten. Andererseits können von dem mobilen Endgerät an die jeweiligen Haushaltsgeräte auch Steuersignale übermittelt werden, durch welche das jeweilige Haushaltsgerät angesteuert werden kann. Diese Steuersignale können beispielsweise Einstellungen für das jeweilige Haushaltsgerät beinhalten, welche dann an dem jeweiligen Haushaltsgerät vorgenommen werden. Aufgrund der Steuersignale kann ein Haushaltsgerät aber auch aus einem Standby-Modus aktiviert und wieder deaktiviert werden und/oder es kann ein Betriebsprozess des Haushaltsgeräts eingeleitet und/oder unterbrochen werden.
Eine Datenkommunikation zwischen Haushaltsgeräten einerseits und einem Internet-Server bzw. einem tragbaren Kommunikationsendgerät andererseits wird beispielsweise durch das System "Home Connect" ermöglicht, welches von dem Hause der Anmelderin angeboten wird.

Die Patentschrift EP 1 338 961 A2 offenbart ein Verfahren zum rechnergestützten Erzeugen einer graphischen Benutzeroberfläche.

Eine erwähnte graphische Benutzeroberfläche der Firma Miele ist beispielsweise unter der Bezeichnung "Infocontrol Plus" bekannt. An dieser Benutzeroberfläche ist als nachteilig der Umstand anzusehen, dass der aktuelle Betriebszustand der Haushaltsgeräte nur unzureichend signalisiert bzw. dargestellt wird. Der aktuelle Betriebszustand wird nämlich üblicherweise in Textform ausgegeben, wodurch insgesamt lediglich eine unzureichende Informationsdarbietung möglich ist. Da der Benutzer nur unzureichend über den aktuellen Betriebszustand des jeweiligen Haushaltsgeräts informiert wird, können Fehlbedienungen der Haushaltsgeräte nicht vollständig ausgeschlossen werden.

Es ist Aufgabe der Erfindung, bei einem Verfahren der eingangs genannten Gattung Maßnahmen zu treffen, die mit geringem technischen Aufwand gewährleisten, dass der Benutzer bei der Fernüberwachung den aktuellen Betriebszustand des Haushaltsgeräts besonders schnell und zuverlässig erfassen kann und somit insbesondere Fehlbedienungen des Haushaltsgeräts verhindert werden können.

Diese Aufgabe wird erfindungsgemäß durch ein Verfahren, durch ein tragbares Kommunikationsendgerät sowie durch ein Computerprogrammprodukt mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zur Fernüberwachung des Betriebs eines Haushaltsgeräts mithilfe eines von dem Haushaltsgerät separaten, insbesondere tragbaren bzw. mobilen, Kommunikationsendgeräts. Eine Kommunikationseinrichtung des Kommunikationsendgeräts empfängt Zustandsdaten des Haushaltgeräts. Eine Steuereinheit des Kommunikationsendgeräts erfasst einen aktuellen Betriebszustand des Haushaltsgeräts anhand der empfangenen Zustandsdaten und steuert eine Anzeigeeinrichtung (zum Beispiel Touchscreen) des Kommunikationsendgeräts zum Anzeigen einer graphischen Benutzeroberfläche an, welche zur Fernüberwachung des Betriebs - und insbesondere auch zur Fernsteuerung des Haushaltsgeräts - dient. Über die Benutzeroberfläche wird der aktuelle Betriebszustand des Haushaltsgeräts ausgegeben. Erfindungsgemäß beinhaltet das Ausgeben des aktuellen Betriebszustands, dass durch die Steuereinheit in der Benutzeroberfläche eine Bilddarstellung erzeugt wird, welche den aktuellen Betriebszustand charakterisiert. Zur Bereitstellung dieser Bilddarstellung werden Differenzmerkmale zwischen dem aktuellen Betriebszustand und einem Referenzzustand des Haushaltsgeräts ermittelt. Zur Erzeugung der Bilddarstellung wird ein Basisbild, in welchem das Haushaltsgerät in dem Referenzzustand abgebildet ist, durch zumindest ein die Differenzmerkmale veranschaulichendes Überlagerungsbild überlagert, welches unter Zusammenwirken mit dem Basisbild das Haushaltsgerät in dem aktuellen Betriebszustand veranschaulicht.

Auf dem Basisbild wird somit das Haushaltsgerät selbst gegenständlich gezeigt und somit in seiner Form und Ausgestaltung präsentiert. Es werden somit zumindest einige gegenständliche Komponenten des Haushaltsgeräts in dem Basisbild selbst dargestellt und somit zumindest ein Ausschnitt des gesamten Haushaltsgeräts im Basisbild realitätsnah verdeutlicht. Insbesondere werden diese Komponenten geometrisch und somit formspezifisch realitätsnah und nicht nur symbolisch vereinfacht dargestellt, so dass die wirklichkeitsechte Darstellung auch zu einer verbesserte Wahrnehmbarkeit und einem verbesserten Verständnis des Betriebszustands durch den Nutzer führt. Insbesondere wird in dem Basisbild eine perspektivische Darstellung der Komponenten, insbesondere eine perspektivische Teildarstellung einer Komponente gezeigt, wodurch eine auch vergrößerte und nochmals detailgerechtere realitätsnahe Ansicht erreicht wird, und dadurch das Verständnis des Betriebszustands bei einem Nutzer noch einfacher und eindeutiger ist. Entsprechend werden die Differenzmerkmale durch realitätsnahe Elemente bildhaft angezeigt, so dass auch hier die in der Realität erscheinenden bzw. auftretenden echten Differenzmerkmale wirklichkeitsecht verdeutlicht sind. Auch dadurch wird der bildhaft anzuzeigende Betriebszustand sehr realitätsnah präsentiert und für einen Nutzer sehr leicht erkennbar. Insbesondere werden das Basisbild und das Überlagerungsbild als Farbbilder angezeigt, wodurch die Realitätsnähe nochmals erhöht wird.

Erfindungsgemäß wird zur Darstellung des aktuellen Betriebszustands des Haushaltsgeräts demnach eine Bilddarstellung erzeugt, bei welcher ein Überlagerungsbild bzw. ein so genanntes "Overlay" einem Basisbild überlagert wird. Das Basisbild veranschaulicht dabei das Haushaltsgerät in einem Referenzzustand, etwa in einem abgeschalteten Zustand oder einem Stand-By-Zustand, während in dem Überlagerungsbild Differenzmerkmale abgebildet sind, welche eine Differenz zwischen dem aktuellen Betriebszustand und dem Referenzzustand darstellen. Entspricht der aktuelle Betriebszustand beispielsweise einem aktivierten Zustand, in welchem das Haushaltsgerät einen Betriebsprozess durchführt, so können sich die Differenzmerkmale beispielsweise auf Wassertropfen und/oder Wasserspritzer (bei einem wasserführenden Haushaltsgerät) oder aber auf Dampfwolken und/oder Hitzewellen (bei einem Gargerät) beziehen. Mit anderen Worten werden bei der Bilddarstellung mehrere übereinander angeordnete Bildschichten erzeugt, von denen jede jeweils einen Einzelarbeitszustand des Haushaltsgeräts darstellt, wobei die Bildschichten derart miteinander zusammenwirken, dass insgesamt der aktuelle Betriebszustand des Haushaltsgeräts veranschaulicht wird. Durch eine solche Vorgehensweise wird ermöglicht, dass der Benutzer beim Betrachten der graphischen Benutzeroberfläche den aktuellen Betriebszustand des Haushaltsgeräts besonders schnell und zuverlässig erfassen kann, wobei der technische Aufwand zur Erzeugung der Bilddarstellung sehr gering ist, da das Basisbild für mehrere Betriebszustände genutzt werden kann und somit zustandsübergreifend ist. Beispielsweise kann das Basisbild für alle möglichen Betriebszustände dargstellt werden und dazu lediglich ein passendes Überlagerungsbild ausgewählt und dem Basisbild überlagert werden, und zwar abhängig von dem jeweils aktuellen Betriebszustand des Haushaltsgeräts. Ohne viel Aufwand können somit Fehlbedienungen des Haushaltsgeräts durch den Benutzer zuverlässig verhindert werden.

Es kann insbesondere vorgesehen sein, dass die genannte Bilddarstellung in Echtzeit bzw. "online" - d.h. im Moment des Abrufs - erzeugt wird. Alternativ kann die Bilddarstellung aber auch "offline", also als fertig abrufbares Element zur Verfügung gestellt werden.

Die Datenkommunikation zwischen dem (tragbaren) Kommunikationsendgerät einerseits und dem Haushaltsgerät andererseits kann beispielsweise über ein drahtloses Heimnetzwerk, beispielsweise ein WLAN-Netzwerk, und/oder über einen Internet-Server durchgeführt werden. Insbesondere ist vorgesehen, dass die Datenkommunikation über das Heimnetzwerk durchgeführt wird, solange sich das tragbare Kommunikationsendgerät innerhalb der Reichweite des Heimnetzwerks befindet. Befindet sich das tragbare Kommunikationsendgerät außerhalb der Reichweite, so kann die Datenkommunikation über den Internet-Server vorgenommen werden, wobei die Kommunikationsverbindung zum Internet-Server insbesondere über ein Mobilfunknetz aufgebaut werden kann. Das Haushaltsgerät kann dabei über eine zugeordnete Kommunikationsschnittstelle an das Heimnetzwerk - nämlich an einen WLAN-Router - angebunden sein.

Mit der genannten Benutzeroberfläche kann vorzugsweise der Betrieb von mehreren Haushaltsgeräten überwacht werden. Diese Benutzeroberfläche ermöglicht vorzugsweise auch eine Fernsteuerung einer Vielzahl von Haushaltsgeräten. Hierbei kann die Benutzeroberfläche beispielsweise mehrere, separat auswählbare Seiten aufweisen, welche jeweils einem Haushaltsgerät zugeordnet sind und die Fernsteuerung sowie die Fernüberwachung des zugeordneten Haushaltsgeräts ermöglichen.

Unter einem Haushaltsgerät wird vorliegend insbesondere ein Gerät verstanden, welches zur Haushaltsführung eingesetzt wird. Dies kann insbesondere ein Haushaltsgroßgerät sein, wie beispielsweise ein Gerät zur Pflege von Wäschestücken, ein Haushaltsgerät zur Zubereitung von Lebensmitteln, beispielsweise ein Gargerät, wie zum Beispiel ein Backofen oder ein Herd, ein Haushaltsgerät zum Lagern und Konservieren von Lebensmitteln, wie ein Haushaltskältegerät, beispielsweise ein Kühlgerät oder ein Gefriergerät oder eine Kühl-Gefrierkombination, ein Klimagerät oder eine Geschirrspülmaschine. Ein Gerät zur Pflege von Wäschestücken kann dabei eine Waschmaschine, ein Wäschetrockner oder ein Waschtrockner sein. Das Haushaltsgerät kann aber auch ein Haushaltskleingerät sein, wie beispielsweise ein Kaffeevollautomat oder eine Küchenmaschine.

Unter einem tragbaren Kommunikationsendgerät wird vorliegend ein mobiles Endgerät verstanden, welches zur drahtlosen Kommunikation gemäß einem vorbestimmten Kommunikationsstandard ausgebildet ist und auf welchem neue Anwendungen bzw. Applikationen (Computerprogramme) installiert und dann ausgeführt werden können. Das tragbare Kommunikationsendgerät kann beispielsweise ein Mobiltelefon (Smartphone), ein Tablet-PC oder ein vergleichbares mobiles Endgerät sein, wie zum Beispiel ein MP3-Player mit einer entsprechenden Kommunikationseinrichtung und einer Anzeigeeinrichtung. Diese Ausführungsform macht sich dabei die Tatsache zunutze, dass heutzutage nahezu jeder über ein intelligentes Mobiltelefon mit einem Display verfügt, sodass sich der Einsatz von zusätzlichen Kommunikationsgeräten erübrigt.

Alternativ kann das Kommunikationsendgerät auch ein stationäres Gerät sein, wie beispielsweise ein PC.

Zur Darstellung des aktuellen Betriebszustands des Haushaltsgeräts wird also eine Bilddarstellung erzeugt, bei welcher das Basisbild durch zumindest ein Überlagerungsbild überlagert wird. Zu diesem Zwecke kann beispielsweise das so genannte Alpha-Blending-Verfahren genutzt werden, mittels welchem das Basisbild und das Überlagerungsbild miteinander kombiniert werden.

Vorzugsweise ist vorgesehen, dass in dem Basisbild das Haushaltsgerät in einem abgeschalteten Zustand oder in einem Stand-By-Zustand abgebildet ist. Der Referenzzustand kann also ein abgeschalteter Zustand, in welchem das Haushaltsgerät vollständig von einer Energieversorgungsquelle getrennt ist, oder ein Stand-By-Zustand sein, in welchem das Haushaltsgerät betriebsbereit ist. In dem Basisbild kann dabei beispielsweise ein Innenraum des Haushaltsgeräts abgebildet sein. Dieses Basisbild ist vorzugsweise ein statisches und somit unbewegliches Bild.

Wird durch die Steuereinheit des (tragbaren) Kommunikationsendgeräts ein abgeschalteter Zustand und/oder ein Stand-By-Zustand des Haushaltsgeräts detektiert, so kann in der Benutzeroberfläche alleine das Basisbild ohne das Überlagerungsbild angezeigt werden. Der abgeschaltete Zustand und/oder der Stand-By-Zustand wird also alleine durch das Basisbild signalisiert, in welchem vorzugsweise ein Innenraum des Haushaltsgeräts statisch abgebildet ist. Hierbei kann auch zwischen zwei Basisbildern ausgewählt werden, nämlich einem ersten Basisbild für den abgeschalteten Zustand sowie einem zweiten Basisbild für den Stand-By-Zustand. In dem abgeschalteten Zustand kann ein Basisbild angezeigt werden, in welchem der Innenraum des Haushaltsgeräts ohne einen zusätzlichen Inhalt und insbesondere auch schwarz-weiß abgebildet ist. Der Stand-By-Zustand kann hingegen mit einem Basisbild signalisiert werden, in welchem der Innenraum des Haushaltsgeräts mit einem zusätzlichen Inhalt (beispielsweise Wäschestücke oder Geschirrteile) und insbesondere auch farbig abgebildet ist. Die Informationsdarbietung erfolgt somit auf eine besonders einfache Art und Weise, sodass der jeweils aktuelle Betriebszustand des Haushaltsgeräts schnell und zuverlässig erkannt werden kann.

Wird durch die Steuereinheit des (tragbaren) Kommunikationsendgeräts ein aktivierter Zustand des Haushaltsgeräts detektiert, in welchem das Haushaltsgerät einen Betriebsprozess durchführt, kann in der Benutzeroberfläche die Bilddarstellung mit dem Basisbild und zusätzlich dem Überlagerungsbild angezeigt werden. Die kombinierte Bilddarstellung wird also vorzugsweise dann erzeugt, wenn das Haushaltsgerät aktiv ist und momentan einen Betriebsprozess durchführt, beispielsweise einen Waschprozess, einen Trocknungsprozess oder dergleichen. Das Überlagerungsbild kann dabei spezifisch bzw. individuell für jede Phase des Betriebsprozesses ausgewählt werden, beispielsweise für eine Waschphase, eine Schleuderphase und eine Trocknungsphase eines Wasch- und Trocknungsprozesses eines Waschtrockners.

Es erweist sich als besonders vorteilhaft, wenn als Überlagerungsbild eine bildhafte Animation bereitgestellt wird, durch welche die oben genannten Differenzmerkmale beweglich abgebildet werden. Durch eine solche bewegliche Animation, welche quasi ein Video darstellt, kann der aktuelle Betriebszustand des Haushaltsgeräts noch intuitiver wahrgenommen werden und ist somit besonders zuverlässig erfassbar.

Als Überlagerungsbild kann eines der folgenden Bilder bereitgestellt werden, wobei die Auswahl des Überlagerungsbilds vorzugsweise abhängig von dem aktuellen Betriebszustand und/oder abhängig von der Art des Haushaltsgeräts erfolgt:

Als Überlagerungsbild kann ein Bild erzeugt werden, in welchem Wassertropfen und/oder Wasserspritzer abgebildet sind. Diese stellen dann die oben genannten Differenzmerkmale dar, was sich insbesondere bei einem wasserführenden Haushaltsgerät als besonders vorteilhaft erweist. Im aktivierten Zustand eines Wasser führenden Haushaltsgeräts wird nämlich Wasser in dem Innenraum des Haushaltsgeräts geführt. Diese Differenzmerkmale können nun in dem Überlagerungsbild veranschaulicht werden.

Ergänzend oder alternativ kann als Überlagerungsbild ein Bild bereitgestellt werden, in welchem Dampfwolken als Differenzmerkmale abgebildet sind. Dieses Überlagerungsbild erweist sich insbesondere zur Darstellung des aktivierten Betriebszustands eines Gargeräts, wie insbesondere eines Dampf-Backofens, und/oder eines wasserführenden Haushaltsgeräts und/oder eines Wäschetrockners als besonders vorteilhaft. Durch eine Animation von Dampfwolken kann der aktivierte Betriebszustand eines derartigen Haushaltsgeräts besonders wirkungsvoll signalisiert werden.

Weiterhin ergänzend oder alternativ kann als Überlagerungsbild ein Bild bereitgestellt werden, in welchem Dunstwolken als Differenzmerkmale abgebildet sind. Auch dieses Überlagerungsbild ermöglicht eine zuverlässige Darstellung des aktivierten Betriebszustands eines Gargeräts.

Weiterhin ergänzend oder alternativ kann als Überlagerungsbild ein Bild bereitgestellt werden, in welchem Hitzewellen oder Mikrowellen (diese können beispielsweise in Form von beweglichen Rippen dargestellt werden) als Differenzmerkmale abgebildet sind. Dieses Überlagerungsbild ist ebenfalls zur Darstellung des aktivierten Zustands eines Gargeräts besonders gut geeignet, wie insbesondere eines Mikrowellengeräts oder aber eines Backofens.

Weiterhin ergänzend oder alternativ kann als Überlagerungsbild ein Bild bereitgestellt werden, in welchem Frost als Differenzmerkmal abgebildet ist. Ein derartiges Überlagerungsbild kann beispielsweise bei einem Kältegerät eingesetzt werden.

Es ist auch möglich, als Überlagerungsbild ein Bild bereitzustellen, durch welches eine Vibration des abgebildeten Haushaltsgeräts bewirkt wird. Ein derartiges Überlagerungsbild kann beispielsweise durch eine Animation bereitgestellt werden, bei welcher die Konturen des Haushaltsgeräts periodisch bewegt werden. Durch eine solche Vibration kann insbesondere ein Schleuderbetrieb einer Waschmaschine signalisiert werden.

In einer Ausführungsform wird als Überlagerungsbild ein Farbfilter erzeugt, mittels welchem eine Farbgebung des Basisbilds verändert wird. Die Farbgebung der angezeigten Bilddarstellung kann also auch abhängig von dem aktuellen Betriebszustand des Haushaltsgeräts eingestellt werden, was die Informationsdarbietung weiterhin begünstigt. Beispielsweise kann dies auch derart implementiert werden, dass in einem abgeschalteten Zustand des Haushaltsgeräts ein schwarz-weißes Basisbild angezeigt wird, welches nach Umschalten in einen Stand-By-Zustand durch ein entsprechendes Überlagerungsbild überlagert wird, mit welchem aus dem schwarz-weißen Basisbild ein farbiges Bild erzeugt wird. Die Farbgebung kann aber auch im aktivierten Zustand des Haushaltsgeräts verändert werden, beispielsweise bei einem Übergang von einem Waschbetrieb in einen Schleuderbetrieb.

Durch ein Überlagerungsbild können dem in dem Basisbild abgebildeten Haushaltsgerät gegebenenfalls auch Komponenten hinzugefügt und/oder entfernt werden. Es ist beispielsweise möglich, mit einem ersten Überlagerungsbild eine geschlossene Tür des Haushaltsgeräts und mit einem zweiten Überlagerungsbild eine offene Tür anzuzeigen. Durch diese Überlagerungsbilder kann dann zwischen einem deaktivierten und einem aktivierten Zustand des Haushaltsgeräts unterschieden werden.

Vorzugsweise wird das Basisbild und/oder das Überlagerungsbild abhängig von dem aktuellen Betriebsmodus und/oder abhängig von der Art des Haushaltsgeräts aus einem Datenspeicher des (tragbaren) Kommunikationsendgeräts ausgelesen, ohne dass eine Übertragung der Bilder von dem Internet-Server oder dem Haushaltsgerät selbst an das Kommunikationsendgerät erforderlich ist. Der Aufwand bei der Datenübertragung kann somit reduziert bzw. die Menge der zu übertragenden Daten minimal gehalten werden.

Die Erfindung betrifft auch ein tragbares Kommunikationsendgerät, welches zum Durchführen eines erfindungsgemäßen Verfahrens ausgelegt ist.

Ein erfindungsgemäßes Computerprogrammprodukt umfasst ein Speichermedium bzw. einen Datenträger, auf welchem ein Computerprogramm abgelegt ist, welches dazu ausgelegt ist, beim Ablauf auf einem tragbaren Kommunikationsendgerät ein erfindungsgemäßes Verfahren durchzuführen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele sowie unter Bezugnahme auf die beigefügten Zeichnungen näher erläutert.

Es zeigen:
- Fig. 1: in schematischer Darstellung ein System mit Haushaltsgeräten und einem tragbaren Kommunikationsendgerät gemäß einer Ausführungsform der Erfindung;
- Fig. 2: in schematischer Darstellung eine Bilddarstellung mit einem Basisbild und einem Überlagerungsbild zur Darstellung eines aktuellen Betriebszustands einer Geschirrspülmaschine; und
- Fig. 3a bis 3c: in schematischer Darstellung das Basisbild, das Überlagerungsbild sowie die daraus erzeugte Bilddarstellung;

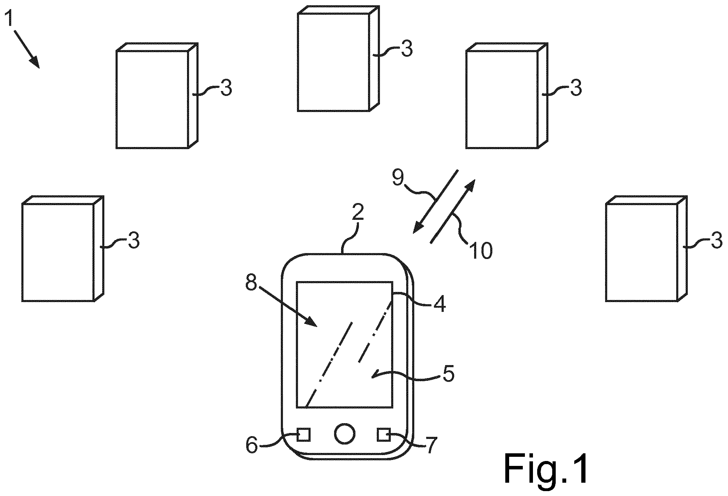

Ein in Fig. 1 dargestelltes System 1 umfasst ein tragbares Kommunikationsendgerät 2 sowie eine Mehrzahl von Haushaltsgeräten 3, welche in einem Haushalt aufgestellt sind und beispielsweise folgende Haushaltsgeräte beinhalten können: eine Waschmaschine, einen Wäschetrockner, einen Backofen, einen Herd, eine Dunstabzugshaube, eine Kühl-Gefrierkombination, eine Geschirrspülmaschine und dergleichen. Das tragbare Kommunikationsendgerät 2 ist im Ausführungsbeispiel als Smartphone ausgebildet und weist eine Anzeigeeinrichtung 4 auf, welche eine berührungssensitive Oberfläche 5 hat und somit insgesamt als Touchscreen ausgebildet ist. In dem tragbaren Kommunikationsendgerät 2 ist eine Steuereinheit 6 angeordnet, welche zur Ansteuerung der Anzeigeeinrichtung 4 ausgebildet ist und außerdem Bedieneingaben empfängt, die ein Benutzer an der berührungssensitiven Oberfläche 5 vornimmt. Zusätzlich umfasst das tragbare Kommunikationsendgerät 2 auch eine Kommunikationseinrichtung 7, welche zur drahtlosen Kommunikation mit den Haushaltsgeräten 3 ausgebildet ist. Diese Kommunikation kann beispielsweise über ein drahtloses Heimnetzwerk erfolgen, zum Beispiel über ein WLAN-Netzwerk, oder unter Vermittlung eines Internet-Servers.

Auf dem tragbaren Kommunikationsendgerät 2 wird eine Applikation als Computerprogramm installiert, welche bzw. welches der Benutzer jederzeit starten kann. Dies erfolgt durch entsprechende Bedieneingaben an der berührungssensitiven Oberfläche 5. Wird diese Applikation aktiviert, erzeugt die Steuereinheit 6 auf der Anzeigeeinrichtung 4 eine graphische Benutzeroberfläche 8, über welche die Haushaltsgeräte 3 bedient werden können. Über diese graphische Benutzeroberfläche 8 können einerseits die jeweiligen Betriebszustände der Haushaltsgeräte 3 ausgegeben werden; andererseits kann der Benutzer über die Benutzeroberfläche 8 die Haushaltsgeräte 3 steuern, indem entsprechende Bedieneingaben durchgeführt werden.

Insgesamt können also von den Haushaltsgeräten 3 Zustandsdaten 9 mit Informationen über den aktuellen Betriebszustand an das tragbare Kommunikationsendgerät 2 übermittelt werden, während von dem tragbaren Kommunikationsendgerät 2 Steuersignale 10 an die Haushaltsgeräte 3 übermittelt werden können.

Die genannte graphische Benutzeroberfläche 8 kann beispielsweise eine Vielzahl von separat aufrufbaren Seiten aufweisen, welche hierarchisch geordnet sind. Zu jedem Haushaltsgerät 3 kann dabei eine separate Seite bereitgestellt werden, auf welcher der aktuelle Betriebszustand dieses Haushaltsgeräts 3 ausgegeben wird.

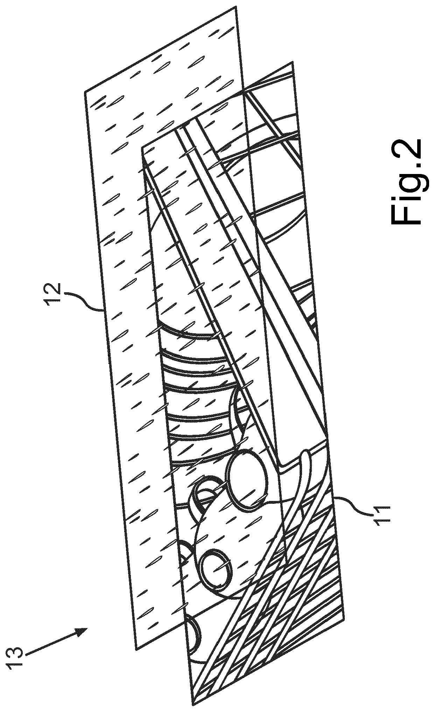

Um den aktuellen Betriebszustand des jeweiligen Haushaltsgeräts 3 dem Benutzer zu signalisieren, wird auf der jeweiligen Seite eine Bilddarstellung erzeugt, welche aus einem Basisbild und einem diesem überlagerten Überlagerungsbild besteht. Bezug nehmend auf Fig. 2 wird zur Veranschaulichung des aktuellen Betriebszustands einer Geschirrspülmaschine beispielsweise ein Basisbild 11 bereitgestellt, in welchem ein Innenraum der Geschirrspülmaschine abgebildet ist. Diesem Basisbild 11 wird ein Überlagerungsbild 12 überlagert, welches eine bewegliche Animation von Wassertropfen darstellt. Wird die Geschirrspülmaschine aktiviert, so kann dieser aktivierte Betriebszustand insgesamt durch eine Bilddarstellung 13 angezeigt werden, welche aus dem Basisbild 11 und den überlagerten, beweglichen Wassertropfen besteht.

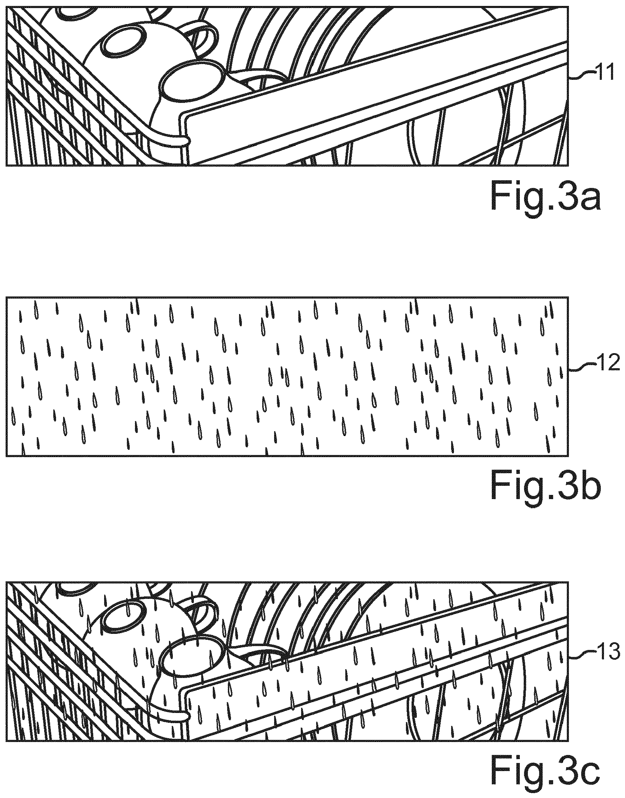

Das Basisbild 11 und das Überlagerungsbild 12 sind außerdem in den Fig. 3a bzw. 3b dargestellt. Fig. 3c zeigt dabei die Bilddarstellung 13, wie sie auf der Anzeigeeinrichtung 4 dargestellt wird.

Mit anderen Worten werden Differenzmerkmale zwischen dem aktuellen Betriebszustand (hier dem aktivierten Betriebszustand) und einem Referenzzustand (hier einem deaktivierten Zustand bzw. einem Stand-By-Zustand) ermittelt. Diese Differenzmerkmale stellen im Ausführungsbeispiel die Wassertropfen dar, welche in dem Überlagerungsbild 12 veranschaulicht werden.

Zur Darstellung des aktuellen Betriebszustands einer Geschirrspülmaschine können insgesamt folgende Bilddarstellungen vorgesehen sein:
- Im ausgeschalteten Zustand, in welchem das Haushaltsgerät 3 von der Energiequelle getrennt ist, kann ein Basisbild 11 angezeigt werden, in welchem ein leerer unbeleuchteter Innenraum der Geschirrspülmaschine abgebildet ist;
- im Stand-By-Zustand (Gerät ist an, aber läuft noch nicht) kann ein Basisbild 11 angezeigt werden, in welchem ein beleuchteter und farbiger Innenraum mit bunten Geschirrteilen in trockenem Zustand abgebildet ist; zur Erzeugung dieser Bilddarstellung kann gegebenenfalls das obige Basisbild genutzt und mit einem zusätzlichen Überlagerungsbild versehen werden, in welchem die Geschirrteile abgebildet sind und/oder welches ein Farbfilter darstellt; alternativ kann aber auch ein anderes Basisbild genutzt werden;
- wird die Geschirrspülmaschine aktiviert, kann die Bilddarstellung 13 gemäß Fig. 3c angezeigt werden, bei welcher das animierte Overlay regelmäßig einen Wasserstrahl, Wasserspritzer und Tropfen zeigt, die hinunterlaufen;
- während des Trocknens kann dagegen ein Überlagerungsbild 12 gewählt werden, in welchem nur noch einzelne Tropfen dargestellt werden;
- im fertigen Zustand kann lediglich der Innenraum mit getrockneten Geschirrteilen dargestellt werden.

Zur Darstellung des aktuellen Betriebszustands einer Waschmaschine können folgende Bilddarstellungen erzeugt werden:
- Im ausgeschalteten Zustand kann ein Basisbild 11 dargestellt werden, in welchem eine leere unbeleuchtete Wäschetrommel abgebildet ist;
- im Stand-By-Zustand kann eine beleuchtete und mit bunten, trockenen Wäschestücken befüllte Wäschetrommel dargestellt werden - hier kann ein anderes Basisbild 11 oder dasselbe Basisbild 11 mit einem Überlagerungsbild 12 dargestellt werden;
- während des Waschens kann das Basisbild 11 mit einem Überlagerungsbild 12 dargestellt werden, in welchem nasse Wäschestücke abgebildet sind und welches außerdem spritzendes Wasser sowie eine mit Wasser teilweise gefüllte Wäschetrommel zeigt - zusätzlich kann auch eine Animation mit bewegten Wasserspritzern und Tropfen angezeigt werden, welche hinunterlaufen;
- während des Schleuderns kann realitätsgetreu ein "Still-Frame" vom Schleudern der bunten Wäsche sowie ein Überlagerungsbild 12 dargestellt werden, in welchem spritzendes Wasser abgebildet ist;
- im fertigen Zustand können Wäschestücke dargestellt werden, welche nass sind und in der Wäschetrommel liegen.

Zur Darstellung des aktuellen Betriebszustands eines Backofens können wiederum folgende Bilddarstellungen erzeugt werden:
- Im abgeschalteten Zustand kann ein Basisbild 11 dargestellt werden, in welchem der Innenraum des Backofens schwarz-weiß und ohne Lebensmittel abgebildet ist;
- im Stand-By-Zustand kann der Innenraum farbig und gegebenenfalls gefüllt mit Lebensmitteln dargestellt werden;
- wird das Haushaltsgerät 3 aktiviert, so kann eine Bilddarstellung 13 erzeugt werden, bei welcher das farbige Basisbild 11 mit einem Überlagerungsbild 12 überlagert wird, welches beispielsweise eine Animation von Hitzewellen zeigt.

Zur Offenbarung gehören auch folgende Merkmale:

Die Erfindung ermöglicht eine schnelle und interessante/neuartige Visualisierung der Gerätezustände (aus, ein, laufend, genauer Status). Hierbei ist es möglich, bei mehreren Geräten einen schnellen Überblick zu erhalten und dennoch genaue Informationen zum jeweiligen Arbeitsstand des Geräts (z.B. wäscht, schleudert bei der Waschmaschine) ablesen zu können. Dies soll aber nicht rein durch textuelle Hinweise geschehen, sondern soll gestalterisch auf visueller Ebene unterstützt werden.

Das "Living Image" basiert auf einer Komposition mehrerer visueller Bild-Schichten übereinander, welche den Aktivitätszustand des Geräts im Einzelnen genau visualisieren und durch ihr Zusammenwirken einen schnellen Überblick ermöglichen. Hierbei werden Fotos im Hintergrund mit (teil-)transparenten Elementen wie Animationen oder Overlays im Vordergrund verbunden. Durch die Kombination von stillen Fotos und bewegten Animationen entstehen viele Vorteile. So werden beim Nutzer verschiedene Reize angesprochen, die zu einer höheren Auffälligkeit und Lesbarkeit der Informationen führen. Die Bewegung der Animationen zieht die Aufmerksamkeit des Nutzers auf sich und zeigt dadurch schnell und auffällig eine generelle Aktivität des Geräts an. Farbe wird als zusätzliches Element verwendet, um die Aktivität des Geräts zu unterstreichen. So sind im ausgeschalteten Zustand die Geräte leer und eher grau dargestellt. Im laufenden Betrieb sind die Geräte bestückt mit buntem Geschirr, bunter Wäsche, etc. und heben sich somit deutlich von den farblosen Darstellungen ab. Gleichzeitig kann der Aufwand der Datenübertragung und Speicherung reduziert werden, da die Schichten erst im Endgerät kombiniert werden, und somit "wieder verwendbar" sind. Gleichzeitig sind einzelne Elemente einfach auswechsel- oder individualisierbar. Durch die Wahl der Animation (z.B. Wassertropfen) kann die Art des Geräts genauer dargestellt werden (z.B. Wasser führend). Durch die Wahl des Hintergrundfotos wird der jeweilige Status genauer visualisiert.

### Bezugszeichenliste

- 1: System
- 2: Kommunikationsendgerät
- 3: Haushaltsgerät
- 4: Anzeigeeinrichtung
- 5: Oberfläche
- 6: Steuereinheit
- 7: Kommunikationseinrichtung
- 8: Benutzeroberfläche
- 9: Zustandsdaten
- 10: Steuersignale
- 11: Basisbild
- 12: Überlagerungsbild
- 13: Bilddarstellung

## Patentansprüche

1. Verfahren zur Fernüberwachung des Betriebs eines Haushaltsgeräts (3) mithilfe eines, insbesondere tragbaren, Kommunikationsendgeräts (2), mit den Schritten:
- Empfangen von Zustandsdaten (9) des Haushaltsgeräts (3) durch eine Kommunikationseinrichtung (7) des Kommunikationsendgeräts (2),
- Erfassen eines aktuellen Betriebszustands des Haushaltsgeräts (3) anhand der empfangenen Zustandsdaten (9) durch eine Steuereinheit (6) des Kommunikationsendgeräts (2) und
- Ansteuern einer Anzeigeeinrichtung (4) des Kommunikationsendgeräts (2) zum Anzeigen einer graphischen Benutzeroberfläche (8) zur Fernüberwachung des Betriebs durch die Steuereinheit (6), wobei über die Benutzeroberfläche (8) der aktuelle Betriebszustand des Haushaltsgeräts (3) ausgegeben wird,
**dadurch gekennzeichnet, dass**
das Ausgeben des aktuellen Betriebszustands umfasst, dass durch die Steuereinheit (6) in der Benutzeroberfläche (8) eine Bilddarstellung (13) bereitgestellt wird, welche den aktuellen Betriebszustand charakterisiert, wobei zur Bereitstellung der Bilddarstellung (13) Differenzmerkmale zwischen dem aktuellen Betriebszustand und einem Referenzzustand des Haushaltsgeräts (3) ermittelt werden und ein Basisbild (11), in welchem das Haushaltsgerät (3) in dem Referenzzustand abgebildet ist, durch zumindest ein die Differenzmerkmale veranschaulichendes Überlagerungsbild (12) überlagert wird, welches unter Zusammenwirken mit dem Basisbild (11) das Haushaltsgerät (3) in dem aktuellen Betriebszustand veranschaulicht.

2. Verfahren nach Anspruch 1, **dadurch gekennzeichnet, dass** falls durch die Steuereinheit (6) des Kommunikationsendgeräts (2) ein abgeschalteter Zustand des Haushaltsgeräts (3) detektiert wird, in der Benutzeroberfläche (8) alleine das Basisbild (11) ohne das Überlagerungsbild (12) angezeigt wird.

3. Verfahren nach Anspruch 1 oder 2, **dadurch gekennzeichnet, dass** falls durch die Steuereinheit (6) des Kommunikationsendgeräts (2) ein aktivierter Zustand des Haushaltsgeräts (3) detektiert wird, in welchem das Haushaltsgerät (3) einen Betriebsprozess durchführt, in der Benutzeroberfläche (8) die Bilddarstellung (13) mit dem Basisbild (11) und dem Überlagerungsbild (12) angezeigt wird.

4. Verfahren nach einem der vorhergehenden Ansprüche, **dadurch gekennzeichnet, dass** als das Überlagerungsbild (12) eine bildhafte Animation bereitgestellt wird, durch welche die Differenzmerkmale beweglich abgebildet werden.

5. Verfahren nach einem der vorhergehenden Ansprüche, **dadurch gekennzeichnet, dass** als Überlagerungsbild (12) zumindest eines der folgenden Bilder bereitgestellt wird:
- ein Bild, in welchem Wassertropfen und/oder Wasserspritzer als Differenzmerkmale abgebildet sind, und/oder
- ein Bild, in welchem Dampfwolken als Differenzmerkmale abgebildet sind, und/oder
- ein Bild, in welchem Dunstwolken als Differenzmerkmale abgebildet sind, und/oder
- ein Bild, in welchem Hitzwellen und/oder Mikrowellen als Differenzmerkmale abgebildet sind, und/oder
- ein Bild, in welchem Frost als Differenzmerkmale abgebildet ist, und/oder
- ein Bild, durch welches eine Vibration des abgebildeten Haushaltsgeräts (3) bewirkt wird.

6. Verfahren nach einem der vorhergehenden Ansprüche, **dadurch gekennzeichnet, dass** als Überlagerungsbild (12) ein Farbfilter erzeugt wird, mittels welchem eine Farbgebung des Basisbilds (11) verändert wird.

7. Verfahren nach einem der vorhergehenden Ansprüche, **dadurch gekennzeichnet, dass** das Basisbild (11) und/oder das Überlagerungsbild (12) abhängig von dem aktuellen Betriebsmodus aus einem Datenspeicher des Kommunikationsendgeräts (2) ausgelesen wird.

8. Tragbares Kommunikationsendgerät (2), welches dazu ausgelegt ist, ein Verfahren nach einem der vorhergehenden Ansprüche durchzuführen.

9. Computerprogrammprodukt mit einem Speichermedium, auf welchem ein Computerprogramm abgelegt ist, das dazu ausgelegt ist, beim Ablauf auf einem tragbaren Kommunikationsendgerät (2) ein Verfahren nach einem der Ansprüche 1 bis 7 durchzuführen.

## Claims

1. Method for remote monitoring of the operation of a household appliance (3) by means of an in particular portable communication end device (2), comprising the steps:
- receiving status data (9) of the household appliance (3) by means of a communication apparatus (7) of the communication end device (2),
- detecting a current operating status of the household appliance (3) on the basis of the received status data (9) by means of a control unit (6) of the communication end device (2), and
- actuating a display apparatus (4) of the communication end device (2) for the purpose of displaying a graphical user interface (8) for remote monitoring of the operation by means of the control unit (6), wherein the current operating status of the household appliance (3) is output via the user interface (8),
**characterised in that**
the outputting of the current operating status comprises that an image depiction (13) is provided by the control unit (6) in the user interface (8), which image depiction (13) characterises the current operating status, wherein, in order to provide the image depiction (13), differential features between the current operating status and a reference status of the household appliance (3) are identified and a basis image (11) in which the household appliance (3) is depicted in the reference status is overlaid by at least one overlay image (12) illustrating the differential features, which overlay image (12), in cooperative interaction with the basis image (11), visualises the household appliance (3) in the current operating status.

2. Method according to claim 1, **characterised in that** if an off state of the household appliance (3) is detected by the control unit (6) of the communication end device (2), just the basis image (11) is displayed in the user interface (8), without the overlay image (12).

3. Method according to claim 1 or 2, **characterised in that** if an activated state of the household appliance (3) in which the household appliance (3) is performing an operating process is detected by the control unit (6) of the communication end device (2), the image depiction (13) comprising the basis image (11) and the overlay image (12) is displayed in the user interface (8).

4. Method according to one of the preceding claims, **characterised in that** the overlay image (12) is provided in the form of a pictorial animation by means of which the differential features are represented by moving images.

5. Method according to one of the preceding claims, **characterised in that** at least one of the following images is provided as an overlay image (12):
- an image in which water drops and/or water sprays are depicted as differential features, and/or
- an image in which clouds of steam are depicted as differential features, and/or
- an image in which clouds of vapour are depicted as differential features, and/or
- an image in which heat waves and/or microwaves are depicted as differential features, and/or
- an image in which frost is depicted as a differential feature, and/or
- an image by means of which a vibration of the depicted household appliance (3) is effected.

6. Method according to one of the preceding claims, **characterised in that** a colour filter by means of which a colouring of the basis image (11) is changed is generated as an overlay image (12).

7. Method according to one of the preceding claims, **characterised in that** the basis image (11) and/or the overlay image (12) are/is read out from a data memory of the communication end device (2) as a function of the current operating mode.

8. Portable communication end device (2) which is configured for performing a method according to one of the preceding claims.

9. Computer program product having a storage medium on which is stored a computer program which is configured for performing a method according to one of claims 1 to 7 when executed on a portable communication end device (2).

## Revendications

1. Procédé de surveillance à distance du fonctionnement d'un appareil électroménager (3) à l'aide d'un terminal de communication (2), en particulier portable, comportant les étapes suivantes :
- réception de données d'état (9) de l'appareil électroménager (3) par un dispositif de communication (7) du terminal de communication (2),
- détection d'un état de fonctionnement actuel de l'appareil électroménager (3) à l'aide des données d'état reçues (9) par une unité de commande (6) du terminal de communication (2) et
- commande d'un dispositif d'affichage (4) du terminal de communication (2) pour l'affichage d'une surface utilisateur graphique (8) pour la surveillance à distance du fonctionnement par l'unité de commande (6), l'état de fonctionnement actuel de l'appareil électroménager (3) étant produit en sortie via la surface utilisateur (8),
**caractérisé en ce que** la production en sortie de l'état de fonctionnement actuel inclut la fourniture, par l'unité de commande (6), sur la surface utilisateur (8), d'une représentation d'image (13) qui caractérise l'état de fonctionnement actuel, des caractéristiques différentielles entre l'état de fonctionnement actuel et un état de référence de l'appareil électroménager (3) étant déterminées pour la fourniture de la représentation d'image (13) et à une image de base (11), dans laquelle l'appareil électroménager (3) est reproduite dans l'état de référence, étant superposée au moins une image de superposition (12) qui montre les caractéristiques différentielles et qui, en coopérant avec l'image de base (11), montre l'appareil électroménager (3) dans l'état de fonctionnement actuel.

2. Procédé selon la revendication 1, **caractérisé en ce que**, si l'unité de commande (6) du terminal de communication (2) détecte un état éteint de l'appareil électroménager (3), seule l'image de base (11) est affichée sur la surface utilisateur (8), sans l'image de superposition (12).

3. Procédé selon la revendication 1 ou 2, **caractérisé en ce que**, si l'unité de commande (6) du terminal de communication (2) détecte un état activé de l'appareil électroménager (3) dans lequel l'appareil électroménager (3) exécute un processus de fonctionnement, la représentation d'image (13) est affichée avec l'image de base (11) et l'image de superposition (12) sur la surface utilisateur (8).

4. Procédé selon l'une des revendications précédentes, **caractérisé en ce qu'**est fournie, en tant qu'image de superposition (12), une animation imagée permettant de représenter de manière mobile les caractéristiques différentielles.

5. Procédé selon l'une des revendications précédentes, **caractérisé en ce qu'**est fournie, en tant qu'image de superposition (12), au moins l'une des images suivantes :
- une image dans laquelle sont représentées des gouttes d'eau et/ou des éclaboussures d'eau en tant que caractéristiques différentielles et/ou
- une image dans laquelle sont représentés des nuages de vapeur en tant que caractéristiques différentielles et/ou
- une image dans laquelle sont représentés des nuages de brume en tant que caractéristiques différentielles et/ou
- une image dans laquelle sont représentées des ondes de chaleur et/ou des micro-ondes en tant que caractéristiques différentielles et/ou
- une image dans laquelle est représenté du gel en tant que caractéristiques différentielles et/ou une image qui provoque une vibration de l'appareil électroménager représenté (3).

6. Procédé selon l'une des revendications précédentes, **caractérisé en ce qu'**est généré, en tant qu'image de superposition (12), un filtre de couleur au moyen duquel est modifiée une coloration de l'image de base (11).

7. Procédé selon l'une des revendications précédentes, **caractérisé en ce que** l'image de base (11) et/ou l'image de superposition (12) sont extraites, en fonction du mode de fonctionnement actuel, hors d'une mémoire de données du terminal de communication (2).

8. Terminal de communication portable (2) qui est conçu pour exécuter un procédé selon l'une des revendications précédentes.

9. Produit de programme informatique comportant un support de mémoire sur lequel est déposé un programme informatique qui est conçu pour exécuter un procédé selon l'une des revendications 1 à 7 lorsqu'il tourne sur un terminal de communication portable (2).
